# EUROPÄISCHE PATENTANMELDUNG

(11) **EP 2 722 208 A2**
(43) Veröffentlichungstag der Anmeldung: **23.04.2014**
(21) Anmeldenummer: 13177972.0
(22) Anmeldetag: 25.07.2013
(51) Int. Cl.: B60J 7/16, B60J 5/10, E05B 83/10

(54) **Nutzfahrzeugaufbau mit einem höhenverstellbaren Dach und Nutzfahrzeug mit einem derartigen Nutzfahrzeugaufbau**

(30) Priorität: 29.08.2012 DE 102012107956
(71) Anmelder: Kögel Trailer GmbH & Co. KG, 89349 Burtenbach (DE)
(72) Erfinder: Kreis, Reinhard, 89356 Konzenberg (DE)
(74) Vertreter: Meissner, Bolte & Partner GbR

(57) **Zusammenfassung**

Die Erfindung betrifft einen Nutzfahrzeugaufbau mit einem höhenverstellbaren Dach und einem Heckportal, das wenigstens einen Dachbalken (10) und einen Türflügel (20) umfasst, der in einem geschlossenen Zustand an einer Außenseite (11) des Dachbalkens (10) anliegt und wenigstens ein bewegliches Riegelelement (21) aufweist, wobei die Außenseite (11) des Dachbalkens (10) für jedes Riegelelement (21) des Türflügels (20) eine Ausnehmung (12) umfasst, in der eine Haltestange (13) angeordnet ist, in die das Riegelelement (21) zum Verriegeln des Heckportals formschlüssig eingreift. Die Erfindung zeichnet sich dadurch aus, dass die Ausnehmung (12) eine Höhe H aufweist, die der Summe aus dem Verstellweg V des höhenverstellbaren Dachs und der Riegelhöhe R des Riegelelements (21) entspricht oder größer ist. Ferner betrifft die Erfindung ein Nutzfahrzeug mit einem derartigen Nutzfahrzeugaufbau.

## Beschreibung

Die Erfindung betrifft einen Nutzfahrzeugaufbau mit einen höhenverstellbaren Dach sowie ein Nutzfahrzeug, insbesondere einen Sattelauflieger oder ein Sattelaufliegergespann, mit einem derartigen Nutzfahrzeugaufbau. Ein derartiger Nutzfahrzeugaufbau ist beispielsweise aus EP 1 862 340 A2 bekannt.

EP 1 862 340 A2 beschreibt einen Nutzfahrzeugaufbau mit einem höhenverstellbaren Dach und einem Heckportal, das durch zwei Eckrungen und einen Dachbalken bzw. Heckspriegel gebildet ist und zwei außen an den Eckrungen angeschlagene Türflügel aufweist. Der Dachbalken erstreckt sich zwischen den Eckrungen des Heckportals, die teleskopartig ausfahrbar sind. Zur Verriegelung der Türflügel sind in diesen Drehwellen integriert, die an einer Unterseite des Türflügels mit einem Spannhebel und an der Oberseite des Türflügels mit einem Verriegelungshaken ausgestattet sind. Durch Betätigung des Spannhebels wird die Welle gedreht, so dass der Verriegelungshaken in der Offenstellung parallel zum Türflügel und in der Schließstellung im Wesentlichen senkrecht zum Türflügel ausgerichtet werden kann. Im Dachbalken des Heckportals sind in höhenversetzte Ausnehmungen mit Zapfen angeordnet, in die der Verriegelungshaken eingreift, um das Heckportal zu verriegeln. Konkret ist vorgesehen, dass der Dachbalken auf einer Außenseite, auf der der Türflügel im geschlossenen Zustand aufliegt, mehrere Ausnehmungen umfasst, in welchen jeweils die Zapfen angeordnet sind. Der Dachbalken umfasst in vertikaler Richtung mehrere, voneinander beabstandete Ausnehmungen, so dass der Türflügel in mehreren, diskreten Höhenstellungen des verstellbaren Dachs verriegelbar ist. Einen ähnlichen Nutzfahrzeugaufbau, der an einem heckseitigen Dachbalken mehrere Eingriffsöffnungen für einen Verriegelungshaken der heckseitigen Türflügel aufweist, um eine Türverriegelung in unterschiedlichen Höhenpositionen des höhenverstellbaren Dachs zu gewährleisten, ist aus EP 2 151 372 B1 bekannt.

Der Nachteil der vorgenannten Nutzfahrzeugaufbauten besteht darin, dass die Verriegelung des Heckportals nur in diskreten Höhenpositionen des Dachs möglich ist. Die Höhenverstellung kann daher nur schrittweise erfolgen, wenn in der gewählten Höhe das Heckportal verriegelt werden soll bzw. der Türflügel in der Schließstellung arretiert werden sollen.

In der Praxis ist es jedoch sinnvoll, die Höhenlage des Nutzfahrzeugdachs exakt an die Höhe des Ladeguts anzupassen, das unterhalb des Dachs im Laderaum mitgeführt wird. Dies ist unter anderem deshalb relevant, weil länderspezifische Vorschriften besondere Außenmaße für ein Nutzfahrzeug vorgeben. So darf in Deutschland ein Nutzfahrzeug nicht höher als 4.000 mm sein. Ferner wirkt sich die Höhe des Nutzfahrzeugs auf den Kraftstoffverbrauch aus, so dass eine exakte Anpassung der Höhe des höhenverstellbaren Dachs an die Höhe des Ladeguts zu einer Kraftstoffersparnis führt.

Aus DE 102 22 998 A1 ist ein Nutzfahrzeugaufbau mit einer Rückwandtür bekannt, wobei die Rückwandtür eine durchgehende Drehwelle aufweist, die einen Spannhebel mit einem Verriegelungshaken verbindet. Der Verriegelungshaken wirkt zum Verriegeln des Türflügels mit einer Haltestange zusammen, der sich zwischen zwei Befestigungselementen erstreckt, die am Dachbalken des Nutzfahrzeugaufbaus angebracht sind. Die Haltestange weist eine Höhe auf, die größer ist als der Verstellweg des höhenverstellbaren Dachs, so dass der Verriegelungshaken an beliebiger Stelle in die Haltestange eingreifen kann. So kann das höhenverstellbare Dach gemäß DE 102 22 998 A1 zwar stufenlos verstellt und der Türflügel in jeder Höhenlage arretiert werden. Durch die außen am Dachbalken angebrachte Haltestange ist jedoch die Höhe des Türflügels begrenzt. Im abgesenkten Zustand des Dachs liegt die Haltestange bzw. deren unteres Befestigungselement auf dem Türblatt auf. Die Oberkante des Türblatts darf also eine Höhe nicht überschreiten, die der Höhe des Hubdachs im abgesenkten Zustand abzüglich der Länge der Haltestange entspricht. Selbst im angehobenen Zustand des höhenverstellbaren Dachs begrenzt die Höhe des Türflügels bzw. die Höhe der Zugangsöffnung die Belademöglichkeiten des bekannten Nutzfahrzeugaufbaus.

Die Aufgabe der Erfindung besteht darin, einen Nutzfahrzeugaufbau mit einen höhenverstellbaren Dach anzugeben, das die heckseitige Beladung erleichtert und eine stufenlose Höhenverstellbarkeit gewährleistet, wobei das Heckportal in jeder Höhenposition verriegelbar ist. Ferner ist es Aufgabe der Erfindung, ein Nutzfahrzeug, insbesondere einen Sattelauflieger oder ein Sattelaufliegergespann, mit einem derartigen Nutzfahrzeugaufbau anzugeben.

Erfindungsgemäß wird diese Aufgabe im Hinblick auf den Nutzfahrzeugaufbau durch den Gegenstand des Patentanspruchs 1 und im Hinblick auf das Nutzfahrzeug durch den Gegenstand des Patentanspruchs 9 gelöst.

So beruht die Erfindung auf dem Gedanken, einen Nutzfahrzeugaufbau mit einem höhenverstellbaren Dach und einem Heckportal anzugeben, das wenigstens einen Dachbalken und einen Türflügel umfasst. Der Türflügel kann in einem geschlossenen Zustand (des Heckportals) an einer Außenseite des Dachbalkens anliegen. Ferner kann der Türflügel wenigstens ein bewegliches Riegelelement aufweisen. Die Außenseite des Dachbalkens umfasst vorzugsweise für jedes Riegelelement des Türflügels eine Ausnehmung, in der eine Haltestange angeordnet ist. Das Riegelelement kann zum Verriegeln des Heckportals formschlüssig in die Haltestange eingreifen. Erfindungsgemäß ist vorgesehen, dass die Ausnehmung eine Höhe H aufweist, die der Summe aus dem Verstellweg V des höhenverstellbaren Dachs und der Riegelhöhe R des Riegelelements entspricht oder größer ist.

Die Höhe der Ausnehmung im Dachbalken des erfindungsgemäßen Nutzfahrzeugaufbaus ermöglicht eine stufenlose Verstellung des Hubdaches bzw. höhenverstellbaren Daches, wobei in allen Höhenpositionen des höhenverstellbaren Daches eine Verriegelung des Türflügels möglich ist. Gleichzeitig wird durch die versenkte Anordnung der Haltestange in der Ausnehmung des Dachbalkens erreicht, dass die Höhe des Dachbalkens reduziert ist. Somit steht eine vergleichsweise große Zugangsöffnung zum Laderaum zur Verfügung. Insbesondere zum Unterschied zu der aus DE 102 22 998 A1 bekannten Variante kann bei der Erfindung ein vergleichsweise schmaler Dachbalken und/oder ein vergleichsweise großer Türflügel genutzt werden. Insgesamt wird die Zugangsöffnung zum Laderaum, gerade im abgesenkten Zustand des Hubdaches, vergrößert. Das erleichert die heckseitige Beladung des Nutzfahrzeugaufbaus.

Bei einer bevorzugten Variante des erfindungsgemäßen Nutzfahrzeugaufbaus weist die Ausnehmung eine Höhe H auf, die wenigstens um 5% größer als die Summe aus dem Verstellweg V des höhenverstellbaren Dachs und der Riegelhöhe R des Riegelelements ist. Grundsätzlich weist das höhenverstellbare Dach einen begrenzten Verstellweg auf. Der Verstellweg kann beispielsweise 150 mm betragen. Im Allgemeinen ist es vorteilhaft, wenn der Verstellweg zwischen 100 mm und 600 mm, insbesondere zwischen 110 mm und 400 mm, vorzugsweise zwischen 120 mm und 300 mm, insbesondere zwischen 130 mm und 200 mm, beträgt. Indem die Ausnehmung größer ist als der Verstellweg plus die Höhe des Riegelelements, wird vermieden, dass das Riegelelement an den Begrenzungen der Ausnehmung anschlägt. Insbesondere wird vermieden, dass sich eine Verwindung des Dachbalkens auf das Riegelelement auswirkt.

Es ist möglich, dass die Höhe H der Ausnehmung mehr als 5% größer als die Summe aus Verstellweg V des höhenverstellbaren Dachs und der Riegelhöhe R des Riegelelements beträgt. Insbesondere kann die Ausnehmung eine Höhe H aufweisen, die die Summe aus Verstellweg V des höhenverstellbaren Dachs und der Riegelhöhe R des Riegelelements um wenigstens 10%, insbesondere um wenigstens 15%, insbesondere um wenigstens 20%, insbesondere um wenigstens 25%, insbesondere um wenigstens 30%, insbesondere um wenigstens 35%, insbesondere um wenigstens 40%, übersteigt.

Jedem Riegelelement des Türflügels kann eine einzige Ausnehmung im Dachbalken zugeordnet sein. Im Allgemeinen kann jeder Türflügel mehrere Riegelelemente, insbesondere zwei Riegelelemente, aufweisen. Eine entsprechende Anzahl von Ausnehmungen sind für jeden Türflügel im Dachbalken vorgesehen. In einer besonders bevorzugten Ausführung weist der Dachbalken vier Ausnehmungen auf, die horizontal voneinander beabstandet angeordnet sind. Je zwei Ausnehmungen sind einem Türflügel zugeordnet, der zwei horizontal beabstandet angeordnete Riegelelemente aufweist. Insbesondere ist vorgesehen, dass im Dachbalken nur Ausnehmungen angeordnet sind, die horizontal voneinander beabstandet sind. Die Ausnehmung erstreckt sich vorzugsweise über die gesamte Höhe des Dachbalkens bzw. der Außenseite des Dachbalkens. So wird (nahezu) die gesamte Höhe des Dachbalkens für die Höhenverstellbarkeitsfunktion genutzt, so dass der Dachbalken zu Gunsten einer vergrößerten Ladeöffnung relativ niedrig bzw. schmal ausgebildet sein kann.

Die in der Ausnehmung angeordnete Haltestange erstreckt sich vorzugsweise vertikal. Dies vereinfacht die Konstruktion des Verschlussmechanismus für den Türflügel. Insbesondere kann der Türflügel eine an sich bekannte Riegelwelle aufweisen, die sich vollständig vertikal durch den Türflügel erstreckt. An einem oberen Ende der Riegelwelle ist das Riegelelement angeordnet. Das untere Ende der Riegelwelle kann mit einem Spannhebel verbunden sein, der zur Betätigung des Verschlussmechanismus geeignet ist. Durch Drehung der Riegelwelle um ihre vertikale Längsachse wird das Riegelelement rotiert. Zum Verschließen wird das Riegelelement, das insbesondere hakenförmig ausgebildet sein kann, in die Ausnehmung des Dachbalkens gedreht und umgreift die Haltestange. Zum Entriegeln erfolgt eine gegenläufige Drehung, ausgelöst durch die Betätigung des Spannhebels am unteren Ende der Riegelwelle, wodurch das Riegelelement aus der Ausnehmung im Dachbalken herausgedreht wird.

Bei dem erfindungsgemäßen Nutzfahrzeugaufbau ist bevorzugt vorgesehen, dass sich die Haltestange vollständig durch die Ausnehmung erstreckt. Konkret kann die Haltestange in einer Oberseite und einer Unterseite des Dachbalkens gehalten sein und die Ausnehmung vollständig vertikal durchdringen. Somit ist sichergestellt, dass über den gesamten Verstellweg des höhenverstellbaren Dachs ein Eingriff des Riegelelements mit der Haltestange erfolgen kann. Die Haltestange ist vorzugsweise derart im Dachbalken verankert, dass eine sichere Verriegelung des Türflügels gewährleistet ist.

Die Haltestange kann insbesondere seitlich in der Ausnehmung angeordnet sein. Somit kann das Riegelelement leicht in die Ausnehmung eingreifen und die Haltestange hintergreifen, um den Türflügel zu verriegeln.

In einer bevorzugten Ausführungsform des erfindungsgemäßen Nutzfahrzeugaufbaus weist der Dachbalken eine geschlossene Innenseite auf, die einen Boden der Ausnehmung bildet. Die Ausnehmung erstreckt sich nicht vollständig durch den Dachbalken, sondern ist in Längsrichtung des Nutzfahrzeugaufbaus, insbesondere zur Innenseite bzw. zum Laderaum des Nutzfahrzeugaufbaus hin, begrenzt. Dadurch wird vermieden, dass über die Ausnehmung Feuchtigkeit in den Laderaum des Nutzfahrzeugaufbaus gelangt. Die geschlossene Innenseite des Dachbalkens, die den Boden der Ausnehmung bildet, dient so einer verbesserten Dichtigkeit des Nutzfahrzeugaufbaus.

Die Ausnehmung kann außerdem durch eine Bürstendichtung überdeckt oder überdeckbar sein. Die Bürstendichtung kann insbesondere fluchtend mit der Außenseite des Dachbalkens in der Ausnehmung angeordnet sein. Dadurch wird die Dichtigkeit des Nutzfahrzeugaufbaus sowie eine Verschmutzung der Ausnehmung vermieden. Beim Eingreifen in die Ausnehmung durchgreift das Riegelelement die Bürstendichtung und gelangt anschließend innerhalb der Ausnehmung in Eingriff mit der Haltestange. Die Bürstendichtung dichtet so auch im verriegelten Zustand des Türflügels ab, da die Bürsten der Bürstendichtung das Riegelelement vollständig umgreifen.

Gemäß einem nebengeordneten Aspekt beruht die Erfindung auf dem Gedanken, ein Nutzfahrzeug, insbesondere einen Sattelauflieger oder ein Sattelaufliegergespann, mit einem zuvor beschriebenen Nutzfahrzeugaufbau anzugeben.

Die Erfindung wird im Folgenden anhand eines Ausführungsbeispiels unter Bezugnahme auf die beigefügten, schematischen Zeichnungen näher erläutert. Darin zeigen:
- Fig. 1: eine perspektivische Ansicht eines Dachbalkens des erfindungsgemäßen Nutzfahrzeugaufbaus nach einem bevorzugten Ausführungsbeispiel;
- Fig. 2: eine Detailansicht des Dachbalkens gemäß Fig. 1;
- Fig. 3: eine perspektivische Detailansicht des Dachbalkens gemäß Fig. 1 sowie eines Türflügels im verriegelten Zustand, wobei das höhenverstellbare Dach in einer oberen Position ist; und
- Fig. 4: die Detailansicht gemäß Fig. 3, wobei das höhenverstellbare Dach in einer unteren Position ist.

Der erfindungsgemäße Nutzfahrzeugaufbau, wie er anhand des nachfolgenden Ausführungsbeispiels näher beschrieben wird, ist insbesondere für Sattelauflieger geeignet. Besonders bevorzugt ist die Verwendung der Erfindung bei Sattelaufliegern, die mit flexiblen Seitenwänden ausgestattet sind. Derartige Sattelauflieger sind als Schiebeplanenauflieger bzw. Curtainsider bekannt. Ferner kann der erfindungsgemäße Nutzfahrzeugaufbau ein flexibles Dach, beispielsweise ein Schiebedach umfassen.

Grundsätzlich weist der Nutzfahrzeugaufbau ein höhenverstellbares Dach auf. Das Dach wird von Dachbalken getragen, die mit Eckrungen verbunden sind. Die Eckrungen können eine Teleskopeinrichtung aufweisen, die es ermöglicht, das Dach insgesamt in der Höhe zu verstellen. Dabei kann die Höhenverstellung synchron erfolgen, so dass das gesamte Dach gleichmäßig angehoben bzw. abgesenkt werden kann. Es ist auch möglich, das Dach nur im Heckbereich und/oder nur im Frontbereich anzuheben bzw. abzusenken.

Bei der Höhenverstellung des Dachs im Heckbereich ist sicherzustellen, dass in jeder Höhenlage auch eine Verriegelung des am Heck vorgesehenen Heckportals möglich ist. Am Heck des Nutzfahrzeugaufbaus ist im Allgemeinen wenigstens ein Türflügel 20 angeordnet, der drehgelenkig an einer Eckrunge gelagert ist. Der Türflügel 20 ist an der Eckrunge höhenkonstant angeschlagen, insbesondere so dass eine untere Kante des Türflügels konstant im Bereich einer Ladebodenebene angeordnet ist.

Vorzugsweise umfasst der Nutzfahrzeugaufbau zwei gegenläufige Türflügel 20 nach Art einer Doppelflügeltür. Jeder Türflügel 20 ist jeweils an einer Eckrunge drehbar gelagert.

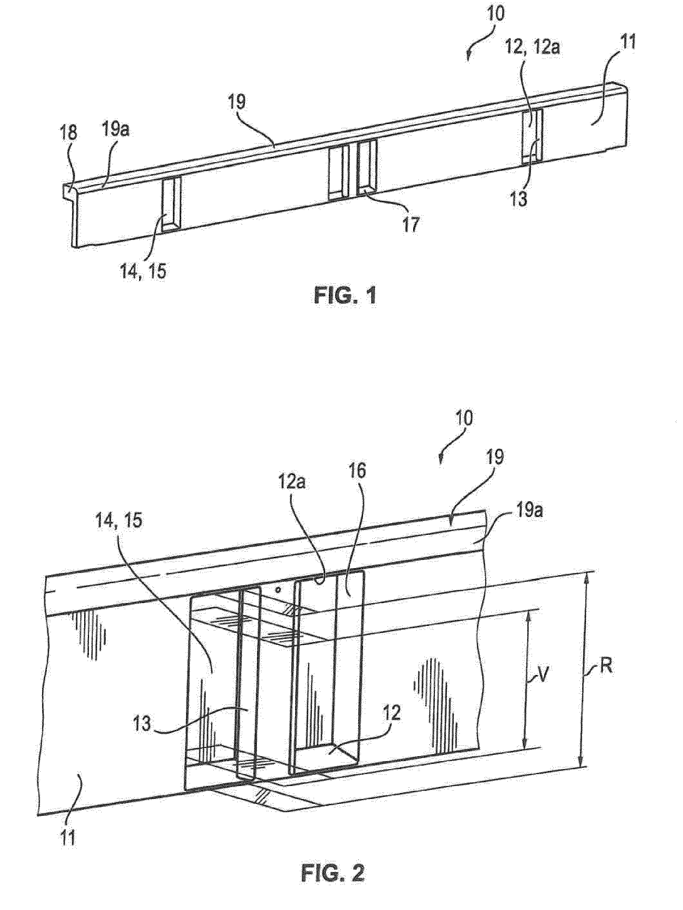

Zwischen den Eckrungen erstreckt sich ein Dachbalken 10, an den die Türflügel 20, insbesondere in geschlossenem Zustand anschlagen. Der Dachbalken 10 ist in perspektivischer Darstellung in Fig. 1 gezeigt. Es ist erkennbar, dass der Dachbalken 20 im Wesentlichen ein L-förmiges Querschnittsprofil aufweist. Grundsätzlich kann der Dachbalken 20 ein Hohlprofil umfassen, insbesondere im Wesentlichen kastenförmig ausgebildet sein. Der Dachbalken 10 weist eine Außenseite 11 auf, die heckseitig ausgerichtet ist. An die Außenseite 11 des Dachbalkens 10 schlägt der Türflügel 20 im geschlossenen Zustand an. Mit anderen Worten liegt der Türflügel 20 im geschlossenen Zustand auf der Außenseite 11 des Dachbalkens 10 auf.

Der Dachbalken 10 weist eine Innenseite 14 auf, die im Wesentlichen parallel zur Außenseite 11 ausgerichtet und von dieser beabstandet angeordnet ist. Die Innenseite 14 und die Außenseite 11 des Dachbalkens 10 sind durch eine Unterseite 17 miteinander verbunden. In einem oberen Bereich weist der Dachbalken 10 einen schenkelartigen Fortsatz 18 auf, der sich in Richtung des Laderaums des Nutzfahrzeugaufbaus erstreckt. Der schenkelartige Fortsatz 18 umfasst eine Oberseite 19, die den Dachbalken 10 begrenzt. Die Oberseite 19 geht mit einer Fase 19a in die Außenseite 11 über.

Der Dachbalken 10 weist mehrere Ausnehmungen 12 auf, die zur Außenseite 11 geöffnet sind, d.h. die Außenseite 11 des Dachbalkens 10 weist die Ausnehmungen 12 auf. Die Ausnehmungen 12 sind jeweils rechteckig ausgebildet und erstrecken sich über die gesamte Höhe der Außenseite 11. Insgesamt sind vier Ausnehmungen 12 vorgesehen, die in horizontaler Richtung zueinander beabstandet angeordnet sind. Jeweils zwei Ausnehmungen 12 sind einem Türflügel 20 zugeordnet.

Die Ausnehmungen 12 weisen einen Boden 15 auf, der durch die Innenseite 14 des Dachbalkens 10 gebildet sein kann. Alternativ kann der Boden 15 einem separaten, vom Dachbalken 10 unabhängigen Bauteil zugeordnet sein. Beispielsweise kann ein schalen- bzw. schachtelartiges Element umfassend den Boden 15 und Seitenwände 16 in den Dachbalken 10 integriert sein. Dabei kann der Boden 15 an der Innenseite 14 des Dachbalkens 10 anliegen. Grundsätzlich kann die Ausnehmung 12 vier Seitenwände 16 umfassen, so dass die Ausnehmung 12 mit Ausnahme ihrer Eingriffsöffnung 12a allseitig umschlossen ist.

In der Ausnehmung 12 ist eine Haltestange 13 angeordnet. Die Haltestange 13 erstreckt sich vertikal durch den Dachbalken 10 und ist vorzugsweise an der Oberseite 19 und der Unterseite 17 des Dachbalkens fixiert. Die Haltestange 13 ist seitlich in der Ausnehmung 12 angeordnet, erstreckt sich also vorzugsweise entlang einer Seitenwand 16. Ferner ist die Haltestange 13 an der Außenseite 11 angeordnet. Konkret erstreckt sich die Haltestange 13 entlang einer Kante zwischen einer Seitenfläche 16 und der Außenfläche 13 vertikal durch die Ausnehmung 12. Die Haltestange 13 weist zum Boden 15 der Ausnehmung 12 einen Abstand auf. So ist in der Ausnehmung 12 ein Hinterschnitt gebildet, in den ein Riegelelement 21 des Türflügels 20 eingreifen kann.

Fig. 2 zeigt zwei mittlere Ausnehmungen 12 des Dachbalkens 10 im Detail. Es ist erkennbar, dass die beiden im mittleren Bereich des Dachbalkens 10 angeordneten Ausnehmungen, die jeweils unterschiedlichen Türflügeln 20 zugeordnet sein können, im Wesentlichen zueinander liniensymmetrisch ausgebildet sind. Mit anderen Worten ist die Haltestange 13 in einer linksseitigen Ausnehmung 12 an einer rechten Seitenwand 16 der Ausnehmung 12 angeordnet. In einer rechtsseitigen Ausnehmung 12 ist die Haltestange an einer linksseitigen Seitenwand 16 der Ausnehmung 12 angeordnet.

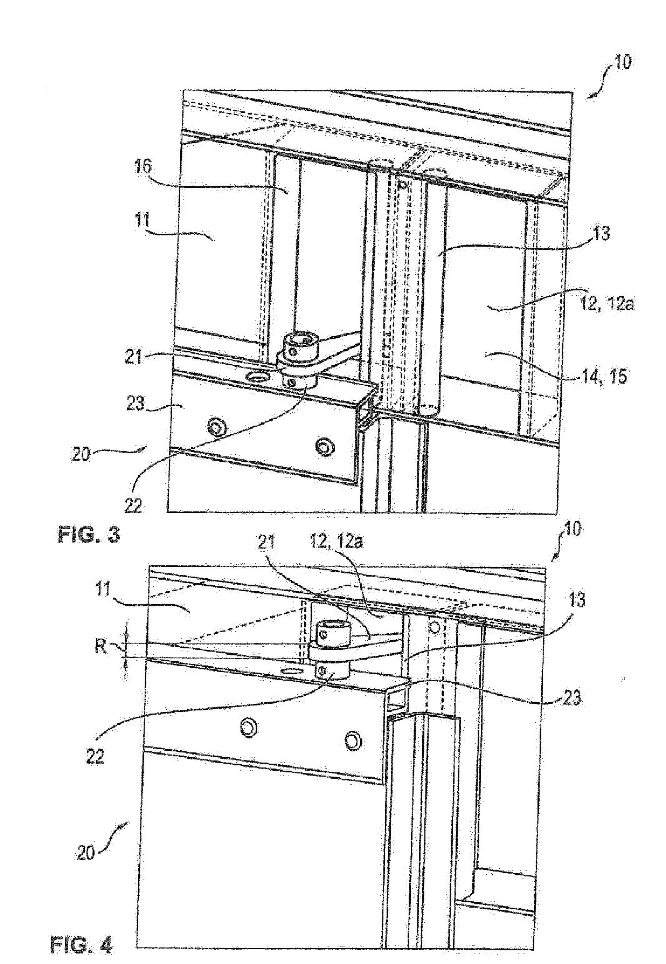

In Fig. 2 ist überdies der Verstellweg V des höhenverstellbaren Dachs gezeigt. Der Verstellweg des höhenverstellbaren Dachs kann beispielsweise 150 mm betragen. Es ist gut erkennbar, dass die Ausnehmung 12 eine Höhe aufweist, die größer ist als der Verstellweg V. Insbesondere ist die Höhe H der Ausnehmung 12 größer als die Summe aus dem Verstellweg V und der Höhe des Riegelelements 21, das zum Verriegeln des Türflügels 20 in die Ausnehmung 12 eingreift. Damit ist gewährleistet, dass sich über den gesamten Verstellweg des höhenverstellbaren Dachs der Türflügel 20 sicher verriegeln lässt. Die Riegelhöhe R des Riegelelements 21 ist beispielhaft in Fig. 4 eingezeichnet. Besonders bevorzugt ist es, wenn bei einem Verstellweg V von 150 mm die Ausnehmung 12 eine Höhe H von 210 mm aufweist. Das Riegelelement 21 weist vorzugsweise eine Riegelhöhe R von höchstens 60 mm, insbesondere höchstens 50 mm, insbesondere höchstens 40 mm, insbesondere höchstens 30 mm, insbesondere höchstens 20 mm, auf.

Es ist klar, dass die Haltestange 13 wenigstens dieselbe Höhe aufweist wie die Ausnehmung 12. Die Haltestange 13 erstreckt sich vollständig durch die Ausnehmung 12 und weist vorzugsweise eine etwas größere Höhe als die Ausnehmung 12 bzw. die Eingriffsöffnung 12a auf, um in der Oberseite 19 und in der Unterseite 17 des Dachbalkens 10 fixiert zu werden.

Fig. 3 zeigt den Dachbalken 10 und den Türflügel 20 in der Verriegelungsposition, wobei sich das höhenverstellbare Dach des Nutzfahrzeugaufbaus in einer oberen Endlage befindet. Das höhenverstellbare Dach bzw. Hubdach ist in die maximal hohe Position ausgefahren. In diesem Fall greift das Riegelelement 21 in einen unteren Bereich in die Ausnehmung 12 ein. Das Riegelelement 21 ist vorzugsweise durch einen Haken gebildet, der die Haltestange 13 hintergreift und so den Türflügel 20 am Dachbalken bzw. am Heckportal verriegelt. Das Riegelelement 21 ist drehfest mit einer Riegelwelle 22 verbunden, die sich vertikal durch den gesamten Türflügel 20 erstrecken kann. An einem unteren Ende der Riegelwelle 22 kann ein Spannhebel vorgesehen sein. Der Spannhebel ist vorzugsweise drehfest mit der Riegelwelle 22 verbunden, so dass sich eine Bewegung des Spannhebels direkt auf eine Bewegung des Riegelelements 21 überträgt.

Fig. 4 zeigt die Anordnung aus Fig. 3, nämlich den Dachbalken 10 und den am Dachbalken 10 verriegelten Türflügel 20, wobei das höhenverstellbare Dach in einer unteren Endlage ist. Das Hubdach ist in die unterste, niedrigste Position abgesenkt. Der Türflügel 20 ist am Dachbalken 10 verriegelt, wobei das Riegelelement 21 in die Ausnehmung 12 des Dachbalkens 10 eingreift und die Haltestange 13 hintergreift.

Aus den Fig. 3 und 4 ist gut erkennbar, dass das Riegelelement 21 in jeder Endlage des Hubdachs zur Oberseite 19 bzw. Unterseite 17 des Dachbalkens 10 beabstandet angeordnet ist. Damit wird vermieden, dass sich eine Verwindung des Dachbalkens 10 auf das Riegelelement 21 überträgt und zu einer Beschädigung führt. Eine derartige Verwindung kann sich beispielsweise beim Fahren über unebenen Untergrund ergeben. Andererseits ist das zwischen dem Riegelelement 21 und der Oberseite 19 bzw. Unterseite 17 des Dachbalkens 10 vorgesehene Spiel vorteilhaft, wenn das Hubdach nur am Heck angehoben bzw. abgesenkt wird, also ein Niveau-Unterschied zwischen einem Frontbereich und einem Heckbereich des Hubdaches besteht.

Ferner ist aus Fig. 3 und 4 erkennbar, dass der Türflügel 20 an einem oberen Ende ein Dichtungselement 23 aufweist. Das Dichtungselement 23 liegt am Dachbalken 10 an und dichtet gegen den Dachbalken 10 ab. Damit wird vermieden, dass Feuchtigkeit in den Laderaum des Nutzfahrzeugaufbaus eindringt. Zusätzlich kann vorgesehen sein, dass die Ausnehmung 12 eine Bürstendichtung aufweist. Die Bürstendichtung ist in den Figuren aus Gründen der Übersichtlichkeit nicht dargestellt. Grundsätzlich kann vorgesehen sein, dass sich in der Ebene der Außenseite 11 über die Ausnehmung 12 eine Bürstendichtung erstreckt. Die Bürstendichtung kann die Ausnehmung 12 überdecken bzw. die Eingriffsöffnung 12a der Ausnehmung 12 verschließen. Die Bürstendichtung ist derart angepasst, dass das Riegelelement 21 die Bürstendichtung durchgreifen kann. Dabei dichtet die Bürstendichtung gegen das Riegelelement 21 ab. Somit wird ein Eindringen von Regenwasser und Schmutz in die Ausnehmung 12 vermieden.

### Bezugszeichenliste

- 10: Dachbalken
- 11: Außenseite
- 12: Ausnehmung
- 12a: Eingriffsöffnung
- 13: Haltestange
- 14: Innenseite
- 15: Boden
- 16: Seitenwand
- 17: Unterseite
- 18: Schenkelartiger Fortsatz
- 19: Oberseite
- 19a: Fase
- 20: Türflügel
- 21: Riegelelement
- 22: Riegelwelle
- 23: Dichtungselement
- H: Höhe der Ausnehmung 12
- V: Verstellweg des höhenverstellbaren Dachs
- R: Riegelhöhe des Riegelelements 21

## Patentansprüche

1. Nutzfahrzeugaufbau mit einem höhenverstellbaren Dach und einem Heckportal, das wenigstens einen Dachbalken (10) und einen Türflügel (20) umfasst, der in einem geschlossenen Zustand an einer Außenseite (11) des Dachbalkens (10) anliegt und wenigstens ein bewegliches Riegelelement (21) aufweist, wobei die Außenseite (11) des Dachbalkens (10) für jedes Riegelelement (21) des Türflügels (20) eine Ausnehmung (12) umfasst, in der eine Haltestange (13) angeordnet ist, in die das Riegelelement (21) zum Verriegeln des Heckportals formschlüssig eingreift,
**dadurch gekennzeichnet, dass**
die Ausnehmung (12) eine Höhe H aufweist, die der Summe aus dem Verstellweg V des höhenverstellbaren Dachs und der Riegelhöhe R des Riegelelements (21) entspricht oder größer ist.

2. Nutzfahrzeugaufbau nach Anspruch 1,
**dadurch gekennzeichnet, dass**
die Ausnehmung (12) eine Höhe H aufweist, die wenigstens um 5%, insbesondere wenigstens um 10%, insbesondere wenigstens um 15%, insbesondere wenigstens um 20%, insbesondere wenigstens um 25%, insbesondere wenigstens um 30%, insbesondere wenigstens um 35%, insbesondere wenigstens um 40%, größer als die Summe aus dem Verstellweg V des höhenverstellbaren Dachs und der Riegelhöhe R des Riegelelements (21) ist.

3. Nutzfahrzeugaufbau nach Anspruch 1 oder 2,
**dadurch gekennzeichnet, dass**
jedem Riegelelement (21) eine einzige Ausnehmung (12) zugeordnet ist.

4. Nutzfahrzeugaufbau nach einem der vorhergehenden Ansprüche,
**dadurch gekennzeichnet, dass**
sich die Haltestange (13) vertikal erstreckt.

5. Nutzfahrzeugaufbau nach einem der vorhergehenden Ansprüche,
**dadurch gekennzeichnet, dass**
sich die Haltestange (13) vollständig durch die Ausnehmung (12) erstreckt.

6. Nutzfahrzeugaufbau nach einem der vorhergehenden Ansprüche,
**dadurch gekennzeichnet, dass**
die Haltestange (13) seitlich in der Ausnehmung (12) angeordnet ist.

7. Nutzfahrzeugaufbau nach einem der vorhergehenden Ansprüche,
**dadurch gekennzeichnet, dass**
der Dachbalken (10) eine geschlossene Innenseite (14) aufweist, die einen Boden (15) der Ausnehmung (12) bildet.

8. Nutzfahrzeugaufbau nach einem der vorhergehenden Ansprüche,
**dadurch gekennzeichnet, dass**
die Ausnehmung (12) durch eine Bürstendichtung überdeckt oder überdeckbar ist.

9. Nutzfahrzeug, insbesondere Sattelauflieger oder Sattelaufliegergespann, mit einem Nutzfahrzeugaufbau nach einem der vorhergehenden Ansprüche.
